(19) **Europäisches Patentamt / European Patent Office / Office européen des brevets**

(11) **EP 2 884 520 B1**

(12) **EUROPEAN PATENT SPECIFICATION**

(45) Date of publication and mention
of the grant of the patent:
**14.02.2018 Bulletin 2018/07**

(51) Int Cl.:
*G01G 3/12* (2006.01)  *H01J 49/26* (2006.01)
*H01J 49/02* (2006.01)

(21) Application number: **13196920.6**

(22) Date of filing: **12.12.2013**

(54) **Nano mass spectrometry**

Nanomassenspektrometrie

Nano-spectrométrie de masse

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**17.06.2015 Bulletin 2015/25**

(73) Proprietor: **Acreo Swedish ICT AB
164 40 Kista (SE)**

(72) Inventor: **Krozer, Anatol
413 17 Göteborg (SE)**

(74) Representative: **Awapatent AB
P.O. Box 11394
404 28 Göteborg (SE)**

(56) References cited:
| | |
|---|---|
| **EP-A1- 0 971 214** | **US-A1- 2003 033 876** |
| **US-A1- 2004 239 119** | **US-A1- 2010 245 820** |
| **US-A1- 2010 320 372** | **US-B1- 7 900 527** |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Field of the Invention

The present invention relates to a device for mass spectrometry. The present invention further relates to a method for mass spectrometry.

Technical Background

Mass spectrometry is widely used in a range of applications. The basic functionality is that a mass spectrometer is able to separate molecules or atoms by their mass number, M, and provide a user with information about the ratio of abundance between different compounds in a sample. More precisely, a mass spectrometer separates molecules with respect to their $M/(n_{eff}*e)$ ratio, where - $n_{eff}$ is the effective charge of a fragment of a molecule created during ionization of the molecule, or of an atom during a detection process and e - is an elementary charge (electron charge). Mass spectrometry is used in e.g. characterization of proteins, or to determine the presence or ratios of different isotopes of an element in a sample for e.g. carbon dating of an item, or for analyzing the contents in a gas.

Conventional mass spectrometers require a sample to be ionized before it can be analyzed. During analysis, different ionized fragments of the sample are separated followed by detection of the separated fragments. The conventional mass spectrometers suffer from a number of disadvantages. Firstly, ionization often destroys fragile samples to be analyzed. Ionization further requires additional equipment making the mass spectrometer rather bulky. Secondly, the dynamic range of conventional mass spectrometers is limited, mostly due to the separation step making it difficult to handle heavy molecules.

US6722200 and US 7 900 527 B1 disclose an apparatus for nanoelectromechanical mass detection. The device is based on a shift of a resonance frequency of a nanomechanical resonator as atoms adhere to the surface of the resonator. With the apparatus disclosed by US6722200, no ionization of the sample is required. However, such a device require careful tuning of the resonant frequency before every use and also complicated electronics in order to follow the resonant frequency as atoms adhere to the resonator. Furthermore, the resonance frequency shifts if the total mass of the resonator increases. Thus, as molecules adhere to the resonator, the sensitivity of the mass spectrometer eventually becomes limited. Furthermore, such devices do not measure mass increase per se but the mass increase rate. However, the mass increase rate is in itself a function not only of the mass, but also of other, often unknown parameters, for example, the details of adsorption kinetics and/or the atom/molecule/ion - surface interaction. Furthermore, this limits the dynamic range of the mass spectrometer.

US20120305760 discloses a membrane detector mass spectrometer. It is based on transfer of thermal energy between an ion and/or molecule as it impacts an electromechanically biased membrane. The impact and adhesion of the molecule excites a vibration in the electromechanically biased membrane. An electric field between the membrane and an anode is altered as the membrane vibrates, thus an impact of a molecule can be sensed. However, this spectrometer relies on adhesion of molecules similar to what is disclosed in US6722200. Furthermore, it requires a complicated biasing scheme including both electrical and mechanical bias.

Hence, it is desirable to achieve a less bulky mass spectrometer with improved dynamic range and/or sensitivity.

Summary of the Invention

In view of the above, it is a general object of the present invention to provide an improved mass spectrometer, providing for improved dynamic range and/or a less bulky mass spectrometer.

According to a first aspect of the present invention, there is provided a device for mass spectrometry comprising: a sensing member deformable in response to an incidence of a particle; a deformation detector arranged and configured to determine a property indicative of a deformation of said sensing member; a processing unit for relating said property indicative of a deformation to at least one property of said particle; wherein, the sensing member is arranged and configured such that particles are scattered by said sensing member.

The present invention is based on the realization that a deformation of a sensing member, caused by an incidence of a particle, may be used for sensing for mass spectrometry. It is further based on the realization that sensing may be performed by allowing particles to be scattered by the sensing member. The particles may be ions or neutral molecules such as, but not limited to, proteins, gas molecules, peptides, DNA/RNA molecules, virus, or variants thereof.

The properties indicative of a deformation may be e.g. an electronic, an optical, a capacitive property, etc. The properties of a particle may be charge, mass, size, etc of the particle.

The incoming particle having e.g. a certain velocity, mass, charge, size, etc may transfer energy to the sensing member by inelastic or elastic scattering. The transferred energy may cause the sensing member to deform. The deformation may be sensed in several ways described below and may be related to at least one of the above-mentioned properties of the particle.

The particle to be sensed may be accelerated by any known method to accelerate neutral molecules or ions. For neutral molecules or molecules like proteins, DNA/RNA, virus etc, such a method may be, but is not limited to, methods utilizing electric dipolar moments of the molecule (e.g. US 2011/0253542) or magnetic properties of the molecule.

Another method to accelerate neutral particles is to first mix them with carriers of lower mass number and then allow the mixture to expand through a nozzle, and be shaped by apertures downstream. If the pressure difference between the nozzle sides (before and after the output of the nozzle) is sufficiently high the expansion will be adiabatic and the heavier molecules at mixtures around a few percent will attain the same speed as the lighter molecules. Thus, the momentum will increase. The speed of the molecules at adiabatic expansion is a function of the gas temperature and of the particle mass.

According to one embodiment, the device is arranged in a hand-held mobile device for mass spectrometry. Such a device is useful, for example in combination with the above method in one exemplary application: measurement of a gas composition of sprays or of exhale from the lungs of a patient. In the latter case it is well known that the exhaled air, among other things, also carries lung proteins as well as, e.g., viruses. In this case a mass spectrometer may be realized as a hand-held mass spectrometer.

According to one embodiment the sensing member may be a nanotube. Nano refers to a size scale of nanometers (1 nanometer = $10^{-9}$ meter), in this case of a diameter of the tube. Such diameter may be less than 100 nanometers. The nanotube may be a, but not limited to, carbon nanotube, silicon carbon nanotube, silicon-nitride carbon nanotube, silicon-germanium carbon nanotube, silicon-carbide carbon nanotube, zinc oxide carbon nanotube or any other semiconductor carbon nanotube and/or semiconductor compound or metal oxide carbon nanotube, metal alloy carbon nanotube, or metal carbon nanotube.

According to one embodiment, the sensing member may be a nanowire. The nanowire may have a width or diameter less than 100 nanometers (1 nanometer = $10^{-9}$ meter). The nanowire may be made from, but not limited to, carbon, silicon, silicon-nitride, silicon-germanium, silicon-carbide zinc oxide, or any other semiconductor and/or semiconductor compound or metal oxide, metal alloy, or metal, e.g., Pt or Au nanowires.

According to one embodiment, the sensing member may be a membrane. A membrane may be a thin component such as a disc with an essentially two-dimensional extension. A membrane may comprise only one or a few atom layers in a lateral direction, perpendicular to the two-dimensional extension. Furthermore, a membrane may be less than 100 nm thick.

Such a membrane may be made from, but not limited to, graphene, graphite, boron nitride, or be etched out in silicon, silicon carbide or silicon nitride or any other semiconductor and/or semiconductor compound.

It is advantageous for the sensing member to be a nano-sized sensing member as described above due to miniaturization of the entire mass spectrometer. It is further advantageous for improving a sensing sensitivity, and thus a resolution of the mass spectrometer. It may improve the resolution due to the similar size-scales of the sensing member and the molecules and/or ions.

According to one embodiment, the sensing member may comprise a coating, the coating is arranged to modify a property of a surface of the sensing member, the property being surface charge, and/or surface energy.

Such coating may be Teflon, polyethylene glycol (PEG) based PLL polymers, fluorine, etc.

The thickness of a coating may be thinner than 100 nanometers, such as thinner than 10 nanometers. The coating is advantageous for preventing adhesion of molecules and/or ions on the surface of the sensing member. Other coatings may be made from two main classes of compounds: biological compounds and/or the so called linkers. Casein or bovine serum albumine are two examples of biological compounds often used to create inert surfaces. Other types of coatings chemically inert towards biomolecule adsorption include, but are not limited to, peptides, DNA strands , - single strands like aptamers or double strands, and lipids, e.g., phospholipids.

Linkers are usually linear compounds in which one end is designed to bind strongly to a suitable substrate while the other end can be used either to bind to an analyte of choice or to be chemically inert. Examples of such compounds are alkane chains terminated by thiols or silanes at one end and with polyethylene glycol at the other end. Thiols are known to bind strongly with several metals, eg., gold Pt or silver while PEG have been found to be chemically inert with respect to e.g., biomolecular adsorption. Other examples of termination of one end of hydrocarbon chains that create strong bonds with metal oxides include, but are not limited to, alkylphosphonic or alkylphosphoric acids. The other end of the hydrocarbon chains can be modified to be, e.g., water superhydrophilic or superhydrophobic or biomolecule resistant.

According to one embodiment, the sensing member may be at an elevated temperature compared to an ambient temperature of the surroundings of the device. This is advantageous for preventing adhesion of molecules and/or ions on the surface of the sensing member. An ambient temperature may the room temperature of the location of the device, for example approximately 25°C. An elevated temperature may be higher than 400°C, such as 600°C, 800°C or 1000°C. The upper limit of temperature is set by: structural modification, e.g., phase transitions, such as Curie transition in ZnO (zinc oxide) or chemical modifications as for example vacancy movement or impurity separation in Si nitrides. Another limit particularly important for metals is the onset of plasticity. All three properties (structural modification, chemical modifications, and plasticity) are material dependent. For example, it may be possible to use Pt (platinum) nanowire or SiC (silicon carbide) nanobeams or nanotubes at much higher temperatures, close to 1000°C, than gold or Si-nitride. The maximum temperature for the gold is around 400°C while that of Si-nitride is not higher than some 500°C.

According to one embodiment, the sensing member may be located in an evacuated space. The evacuated space may be at a pressure at or close to vacuum. It is advantageous to place the sensing member in a vacuum atmosphere for at least two reasons: partly in order to prevent adhesion of particles, such as molecules or ions, on the sensing member, and partly to limit the impingement rate of the particles/atoms/molecules from the ambient onto the sensing member. The pressure of the evacuated space may be lower than $10^{-3}$ Torr, such as lower than $10^{-6}$ Torr, or $10^{-9}$ Torr or $10^{-12}$ Torr, preferably lower than $10^{-6}$ Torr. As an example: the pressure is partly determined from a desired flux of molecules, J, per unit surface area and per second onto a surface (for example a sensing surface). The flux of molecules may be given by:

$$J = p(2\pi mkT)^{-1/2} \tag{1}$$

where p is pressure, m - atomic/molecular mass, k -Boltzmann factor and T absolute temperature. Assuming in this example that we want to analyze individual hits, the measurement time and the settling of the sensing member should be faster than the time between two collisions. Present electronics enables measurements in the GHz range and results from US20120305760 or US6722200 indicate that the sensing member settles within a similar frequency range. Thus, the time between collisions should be about 1 nanosecond or longer.

In an example, assume that the sensing member is a square membrane with the side = 10 $\mu$m while the gas is air, which has an effective mass = 28 x $1,67*10^{-27}$ kg. Using Eq.1 we obtain that pressure should not be higher than about $10^{-6}$ Torr in this example.

The sensing member of several embodiments may advantageously be a passive sensing member. Thus, the sensing member is not in a biased mode. This is advantageous since it may reduce the complexity of the mass spectrometer.

According to one embodiment, the deformation detector may be, but is not limited to, optical, electronic, or capacitive. An optical deformation detector may be based on light beam deflection measurements. Such a light beam may be a laser beam. The light beam may be reflected and redirected by the sensing member and sensed by an optical sensor after the reflection and redirection. In case of a deformation of the sensing member, the reflected light beam may consequently be deflected accordingly.

According to one embodiment, the optical detector may comprise a charge coupled device (CCD). Using CCD enables an efficient way of detecting an amount of redirection of a laser beam. For example, the CCD (e.g. a camera device) has a number of pixels, one which the laser beam hits after being reflected and redirected by the sensing member in a first state where the sensing member is not deformed. In a second state the deformation member may be deformed by the impact of e.g. a molecule. In the second state, the laser beam is reflected and redirected to a second pixel of the CCD. Thus, the distance between the first and second pixel is indicative of the amount of deformation of the sensing member.

An electronic measurement may be based on a piezoelectric member, such as a cantilever. It may further be based on electron transport through the sensing member such that a deformation caused by the incidence of a particle on the sensing member causes a change of the electron transport. The change may be electronically detected by e.g. a voltage measuring device or by impedance measurements.

In order to measure a capacitance, C, between two electrodes, of which one may be our sensing member while the other one is static, one may apply a varying voltage between the electrodes, for example a sinusoidal voltage, and measures a current response of the device, which response lags 90 degrees in phase behind the applied voltage. For a plane parallel plates the capacitance varies inversely with the electrode distance and therefore changes when one of the electrodes is deformed. Other shapes give different functional dependencies between the capacitance and electrode deflections.

In an example, one may enhance the detection sensitivity by implementing a resonant circuit. If the capacitor is coupled in parallel together with an inductor the result will be a resonating circuit with resonance frequency, $f_{res}$, $f_{res}$ =$1/(LC)^{1/2}$ where L is the inductance of the inductor. Here the capacitance changes induced by the deflection of sensing member are reduced to measuring changes of $f_{res}$, $\delta f_{res}$ = $Cf_{res}\delta C$. In this case, $\delta f_{res}$ may be measured accurately at sufficiently high $f_{res}$ with the resolution/accuracy that strongly depends from how narrow the resonance peak is, i.e., from its Q-value.

Furthermore, a measurement may be based on an electric field emission measurement between the sensing member and an electrode placed in the vicinity of the sensing member. An impact of a particle on the sensing member causes a deformation of the sensing member that may change e.g. the distance between the sensing member and the electrode. The change of distance changes an intensity of the electric field which may be detected.

According to one embodiment, the device may comprise a plurality of deformation detectors such as a plurality of optical detectors, a plurality of electronic detectors, a plurality of capacitive detectors or any combinations thereof.

For example, consider as an example a $10\mu\eta\eta$ x $10\mu\eta\eta$ membrane, and its deflection is sensed using capacitive detection. A static electrode of a capacitive sensor element may be made of addressable pixels, say a $1\mu m$ x $1\mu m$ pixel separated from another pixel by additional $1\mu m$. This array of 5x5 pixels would allow one to spatially resolve the deflection and therefore to determine the impact site and impact direction.

According to one embodiment, the deformation may be a deflection of the sensing member. If the sensing member is a nanotube the deflection may be a bending along a longitudinal axis of the nanotube caused by an impact of a molecule and/or ion on the nanotube. If the sensing member is a membrane, a deformation may be bulging, a protuberance, a rounding or any other deviation from a substantially flat surface of the membrane caused by an impact of a molecule and/or an ion on the membrane.

According to several embodiments, the amount of deflection of the sensing member is indicative of the mass of an incident particle on the sensing member. In other words, the deflection of the membrane upon impact depends from the elastic properties of the said membrane and the momentum transfer from the particle to the membrane.

According to several embodiments, the sensing member may advantageously be connected to at least one electrode. The at least one electrode may be coupled to a deformation detector.

According to one embodiment, the device may comprise a plurality of sensing members. The plurality of sensing members may be a plurality of membranes, a plurality of nanotubes, a plurality of nanowires and/or any combinations thereof.

According to a second aspect of the present invention, there is provided a method for mass spectrometry comprising the steps of: receiving an incidence of a particle by a sensing member; detecting a deformation of said sensing member in response to said incidence of said particle; relating said deformation to at least one property of said particle; wherein, said particle is scattered by said sensing member after impact with said sensing member.

The method may be applied to any of the above-mentioned embodiments.

Further effects and features of this second aspect of the present invention are largely analogous to those described above in connection with the first aspect of the invention.

Further features of, and advantages with, the present invention will become apparent when studying the appended claims and the following description. The skilled person realizes that different features of the present invention may be combined to create embodiments other than those described in the following, without departing from the scope of the present invention.

Brief Description of the Drawings

These and other aspects of the present invention will now be described in more detail with reference to the appended drawings showing example embodiments of the invention.

Fig. 1 illustrates an exemplary sensing member of an exemplary embodiment;
Fig. 2 illustrates an exemplary embodiment and a cross-section of the embodiment;
Fig. 3 illustrates an exemplary embodiment comprising a sensing member;
Fig. 4 illustrates an exemplary embodiment comprising a sensing member.
Fig. 5 illustrates an exemplary embodiment.
Fig. 6 illustrates an exemplary embodiment.

Detailed Description of Preferred Embodiments of the Invention

In the present detailed description, various embodiments of a mass spectrometer according to the present invention are mainly discussed with reference to a carbon based sensing member such a carbon nanotube or a graphene sheet. It should be noted that this by no means limits the scope of the present invention which is equally applicable to other materials of the sensing member such as a semiconductor, a semiconductor based compound (e.g. silicon-nitride, silicon-carbide, germanium-nitride etc), metal oxides etc. In the below description "molecule" may be equally replaced by "ion". Furthermore, although some beams or plates/membranes in the drawings are depicted as though beams or plates are firmly and/or rigidly attached to a support they may instead be supported by the support without this rigid attachment. For example, the beams/tubes/plates/membranes depicted in the figures may be simply supported or rigidly attached.

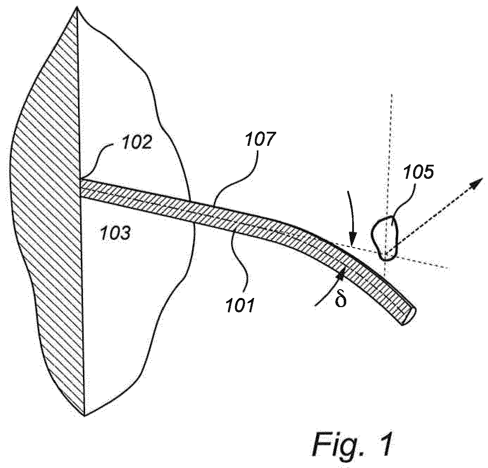

Fig. 1 illustrates an embodiment of the present invention. In Fig. 1, a sensing member 101 is shown in the form of a nanotube 101 suspended on a first side 102 inside a vacuum chamber 103. An incident molecule 105 is scattered by the nanotube 101 at a site of the nanotube 101. The impact of the molecule on the nanotube 101 causes a deflection δ of the nanotube 101. The deflection δ depends on properties of the particle such as e.g. the mass and on properties of the nanotube such as stiffness (e.g. young's modulus). The nanotube 101 has an appropriate coating 107 such that the molecule 105 does not adhere to the nanotube 101 but is scattered by the nanotube 101. Optionally, the nanotube 101 is kept at an elevated temperature.

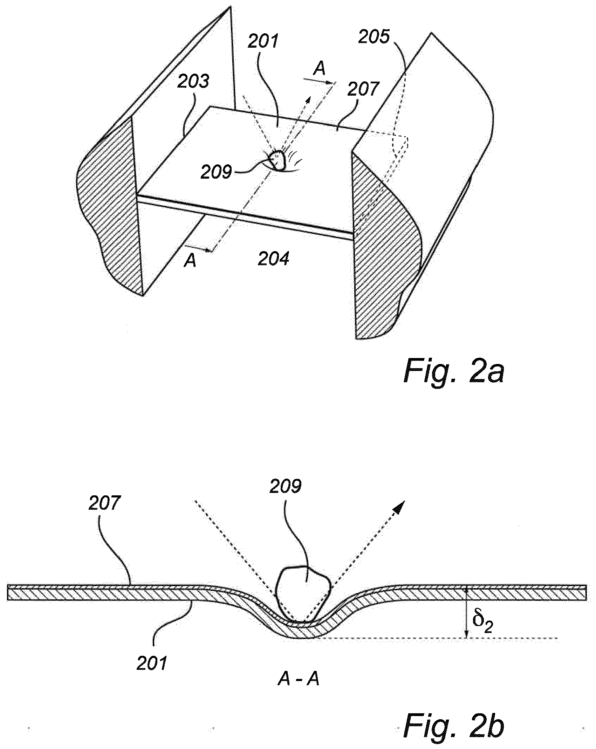

Fig. 2a illustrates a sensing member 201 of an embodiment of the present invention. The sensing member is a membrane 201, such as a graphene sheet 201 and is suspended on two sides 203, 205 inside a vacuum chamber 204. The graphene sheet 201 may equally well be suspended on three or four sides. Optionally, the graphene sheet 201 is kept at an elevated temperature. The graphene sheet 201 has a coating 207 such that incidence molecules do not adhere to the surface of the graphene sheet 207. As shown in Fig. 2, an incoming molecule 209 impacts the surface of the graphene sheet 201 and is scattered by the sheet 201. The impact causes a deformation $\delta_2$ on the graphene sheet 201 as is shown in Fig. 2b. Fig. 2b shows a cross-section of the graphene sheet 201 in Fig. 2a in the plane indicated by A-A' in Fig 2a. The deformation $\delta_2$ depends on properties of the molecule 209 such as e.g. the mass and on the properties of the graphene sheet 201 such as e.g. size or stiffness (e.g. young's modulus).

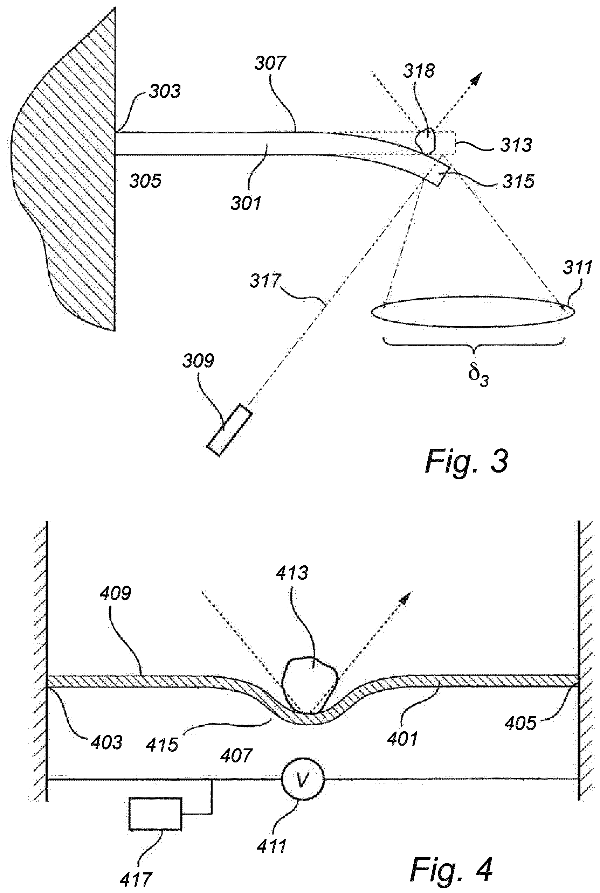

Fig. 3 illustrates an embodiment of the present invention. Fig. 3 shows a side view of a sensing member 301 in the form of a carbon nanotube 301 suspended on a first side 303 (similar to the sensing member in Fig. 1). The carbon nanotube 301 is located inside a vacuum chamber 305. The carbon nanotube 301 further has an appropriate coating 307 to prevent adhesion of incoming molecules. A deflection detector in the form of a laser emitting device 309 and an optical sensor 311 is located such that an emitted laser beam 317 is reflected by the carbon nanotube 301 towards the optical sensor 311, such as e.g. a quadrant cell or any other suitable optical sensor. For example, a pixilated optical sensor having pixels with size of e.g. 1μm by 1μm. A suitable sensor may be a charge couple device chip (CCD-chip). As shown in Fig. 3, an incident molecule 318 impacts the carbon nanotube 301 and is scattered by the nanotube 301. This causes a deformation of the carbon nanotube 301 which causes the reflected laser beam 317 to change position on the quadrant cell 311. The deformation may for example be that the carbon nanotube is deformed from a first deformation state 313 to a second deformation state 315. The change of position is sensed by the quadrant cell 311 and thus the impact of the molecule 318 may be detected. The amount of change of position is related to the deflection of the nanotube 301 which is related to e.g. the mass of the molecule 318. A processing unit, such as a microprocessor, is configured to relate the deflection to a property of the molecule 318.

Fig. 4 illustrates a cross-section of an embodiment of the present invention. Fig. 4 shows a sensing member in the form of a carbon nanotube 401 suspended on a first side 403 and on a second side 405. The carbon nanotube 401 is located inside a vacuum chamber 407. The carbon nanotube 401 further has an appropriate coating 409 to prevent adhesion of incoming molecules. A deformation detector in the form of a voltage measuring device 411 is arranged and configured to measure a voltage across the carbon nanotube 401. As shown in Fig. 4, an incident molecule 413 may impact the carbon nanotube 401 and is scattered by the nanotube 401. The impact causes a deformation 415 of the carbon nanotube 401. The deformation of the nanotube 401 causes a change of the electron transport through the carbon nanotube 401 and thus a change in the measured voltage may be detected by the voltage measuring device 411. The amount of change of the measured voltage is related to properties, such as e.g. mass, of the scattered molecule 412. A processing unit 417, such as a microprocessor, is configured to relate the change in voltage to a property of the molecule.

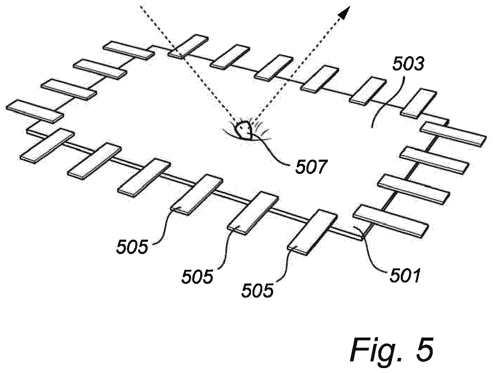

Fig. 5 illustrates an embodiment of the present invention. Fig. 5 shows a sensing member in the form of a suspended graphene sheet 501. The graphene sheet 501 is located inside a vacuum chamber. The sensing member further has an appropriate coating 503 to prevent adhesion of incoming molecules. A deformation detector in the form of a plurality of voltage measuring devices 505 (not all are numbered to avoid cluttering in the drawing) are arranged and configured to each measure a voltage across the graphene sheet 501 across several directions of the graphene sheet 501. As shown in Fig. 5, an incident molecule may impact the graphene sheet 501 and thus be scattered by the graphene sheet 501 which causes a deformation of the graphene sheet 501. The deformation of the graphene sheet causes a change of the electron transport through the graphene sheet 501 and thus a change in the measure voltage is detected at several sites by the plurality of voltage measuring devices 505. The amount of change of the measured voltage is related to properties, such as e.g. mass, of the scattered molecule. Using the plurality of voltage measuring devices 505 enables a processor unit to calculate where on the graphene sheet the impact of a molecule 507 occurred. The processing unit, such as a microprocessor, is further configured to relate the measured voltage to a property of the molecule.

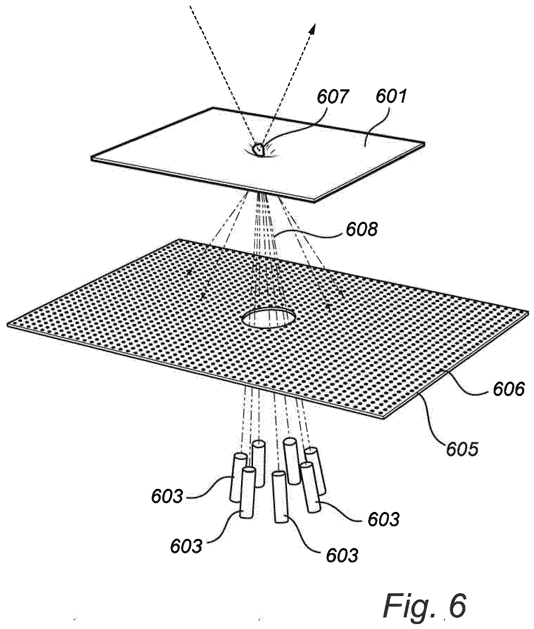

Fig. 6 illustrates yet another embodiment of the present invention. In Fig. 6 the sensing member is a graphene sheet 601. A plurality of laser emitting devices 603 (not all are numbered to avoid cluttering in the drawing) are each arranged to emit a laser beam that is reflected by the graphene sheet 601. A detector 605 comprising an array of optically sensitive elements 606 such as pixels 606 (not all are numbered to avoid cluttering in the drawing) is arranged between the laser emitting devices 603 and the graphene sheet 601. The pixels may be 1μm by 1μm and the detector may be a charge couple device chip (CCD-chip). The CCD-chip 605 has a hole through which laser beams 608 (not all are numbered to avoid cluttering in the drawing) emitted by laser emitting devices are transmitted before hitting the graphene sheet 601. An impact of a molecule 607 on the surface of the graphene sheet 601 causes a deformation of the graphene sheet 601 which causes the reflected laser beams 608 to change position on the detector 605. Thus, the change of position of the reflected beam on the detector is indicative of an impact of a molecule 607. The amount of change of position is related to properties of the molecule 607. Depending on the site of impact on the graphene sheet 601, different pixels 606 will detect the reflected laser beam. This may be used to determine a location on the graphene sheet 601 where the impact occurred using a processing unit. Although the detector 605 is depicted with a hole in Fig. 6, the detector may be embodied without any hole and with the laser emitting devices 603 emitting the laser beams from the sides of the detector 605 as long as the laser beams are reflected by the graphene sheet 601 and redirected towards the detector 605. Furthermore, the detector 605 may be a static electrode in a capacitive measurement setup, without the need for the laser emitting devices. In this case the detector 605 may be a capacitor array having capacitance pixels 605. The detector 605 would then be static and the membrane 601 would be deformed by the impact of a molecule 607. A varying voltage is applied between the electrodes (the membrane 601 and the detector 605 being the electrodes), for example a sinusoidal voltage, and a measurement of a current response of the detector 605, which response lags 90 degrees in phase behind the applied voltage is performed. For a plane parallel plates the capacitance varies inversely with the electrode distance and therefore changes when one of the electrodes (in this case the membrane 601) is deformed. Other shapes give different functional dependencies between the capacitance and electrode deflections. The graphene sheet 601 may be supported on one or more sides.

Deformation of a sensing member depends on the momentum of the particle transferred to the sensor element. Thus, the deformation depends on both mass and on the velocity. The kinetic energy of the particle depends only from the temperature, and at a given temperature (T) the kinetic energy is proportional to kT. On the other hand the kinetic energy is also equal to $\frac{1}{2}(mv^2)$, where m is the particle mass and v is the velocity of the particle. Therefore the momentum (p=mv) of the particle at a given T, on average is proportional to $m^{1/2}$ and is therefore also determined by the particle temperature.

The momentum transfer depends in part on the angle at which the particle hits the sensing member (membrane or beam), and on the position of the impact on the membrane. Below follows an example for a case with normal incidence (perpendicular incidence) of a particle on a sensing member.

For example using a carbon nanotube beam as a sensing member:

Example 1

Assume we have a carbon nanotube beam of length, L, L = $10\mu\eta\eta$ supported by a support. Typical dimensions of the carbon nanotube are: radius, R, R=2nm and thickness, t, t=0,2nm. The Young modulus of such a beam is typically $6(\pm3)$ $10^{11}$Pa. Assume further that a molecule from air at a temperature, T, T = 300K having average molecular weight, $M_W$ = 28 corresponding to a mass m=28x1,67$10^{-27}$kg strikes the beam in the middle. The most probable momentum, $p_{MP}$, is then given by:

$$p_{MP} = (2kTm)^{1/2} \qquad\qquad (2)$$

The striking molecule exerts a force, F, on the beam. An order of magnitude of F is given by $p_{MP}/t_{int}$ where $t_{int}$ is a typical interaction time between the molecule and the surface of the beam. $t_{int}$ is typically of an order of few nanoseconds. The maximal deflection of the beam, $\delta_{max}$, subjected to a point force, F, applied in the middle of the beam is given by:

$$\delta_{max} = FL^3/(48EI) \qquad\qquad (3)$$

where I=$\pi R^3$t is the moment of inertia of a thin circular tube.

Inserting numerical values into eqs. 2 and 3 results in deflection $\delta_{max}$ being of an order of few Angstrom, $\delta_{max}$ ~ 0,5nm

Example 2

Assume the same beam as in Example 1 as a sensing member. This time however it is stricken by a typical protein, for example albumin, $M_w \approx$ 60kDa. A few percent of such protein was seeded into a nitrogen gas and the mixture was allowed to expand adiabatically before striking the beam. Thus albumin has attained the velocity corresponding to a most probable velocity of nitrogen. The most probable momentum of the albumin molecule is then about $10^4$ times larger. The interaction time of the albumin molecule with the surface also increases, by e.g. a factor of 10. This implies that given all other conditions are the same it will deflect the beam by more than 100 nm, thus $\delta_{max} > 100$ nm.

Additionally, variations to the disclosed embodiments can be understood and effected by the skilled person in practicing the claimed invention, from a study of the drawings, the disclosure, and the appended claims. For example additional laser emitting devices may be used in several embodiments. The devices may have different wavelengths in order to distinguish between the different laser beams. In one embodiment, there may be a combination of deformation detectors such as optical and/or electronic and/or capacitive detectors, or any combination thereof. A membrane sensing member may be combined with a nanotube sensing member if so required for an application. Several nanotubes and/or membranes may be used for a device for obtaining a larger surface area of the sensing member. In the illustrated embodiments only optical and electrical deformation detectors are described. There may be other modalities that function equally well for the invention. For example, a capacitive deformation detector or a piezoelectric cantilever type deformation detector.

In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage.

## Claims

1.  A device for mass spectrometry comprising:

    a sensing member (101, 201, 301, 401, 501, 601) deformable in response to an incidence of a particle (105, 209, 318, 413, 507, 607);
    a deformation detector (311, 411, 505, 605) arranged and configured to detect a deformation of said sensing member in response to said incidence of said particle;
    a processing unit (417) for relating said detected deformation to at least one property of said particle; **characterized in that**, said sensing member is arranged and configured such that said particle (105, 209, 318, 507, 607) is inelastically or elastically scattered by said sensing member.

2.  The device according to claim 1, wherein said sensing member (101, 201, 301, 401, 501, 601) is a membrane (201, 501, 601) or a nanotube (101, 201, 401) or a nanowire (101, 201, 401).

3.  The device according to claim 2, wherein said membrane (201, 501, 601) is a graphene sheet.

4.  The device according to claim 2, wherein said nanotube (101, 201, 401) is a carbon nanotube, a semiconductor nanotube, or a metal nanotube.

5.  The device according to any of the previous claims, wherein said sensing member (101, 201, 301, 401, 501, 601) is at an elevated temperature compared to an ambient temperature of the surroundings of said device.

6.  The device according any of the previous claims, wherein said sensing member (101, 201, 301, 401, 501, 601) is located in an evacuated space (103, 204, 305).

7.  The device according to any of the previous claims, wherein said sensing member (101, 201, 301, 401, 501, 601) is passive.

8.  The device according any of the previous claims, wherein said sensing member (101, 201, 301, 401, 501, 601) comprises a coating (107, 207, 307, 409), said coating is arranged to modify a property of a surface of said sensing member, said property being surface charge, and/or surface energy.

9.  The device according to any of the previous claims, wherein said deformation detector is an optical (311, 605), electronic (411, 505) or capacitive detector (605).

10. The device according to claim 9, wherein said optical detector (311, 605) comprises a charge coupled device (CCD).

11. The device according to any of the previous claims, wherein said deformation is a deflection ($\delta_1$, $\delta_2$) of said sensing member.

12. The device according to claim 11, wherein an amount of said deflection ($\delta_1$, $\delta_2$) indicates a mass of an incident particle (105, 209, 318, 507, 607).

13. The device according to any of the previous claims, wherein said sensing member is connected to at least one electrode.

14. A hand-held mobile device for mass spectrometry comprising the device according to any of the preceding claims.

15. A method for mass spectrometry comprising the steps of:

receiving an incidence of a particle (105, 209, 318, 507, 607) by a sensing member (101, 201, 301, 401, 501, 601); detecting a deformation of said sensing member (101, 201, 301, 401, 501, 601) in response to said incidence of said particle (105, 209, 318, 507, 607); relating said deformation to at least one property of said particle (105, 209, 318, 507, 607); **characterized in that**, said particle (105, 209, 318, 507, 607) is inelastically or elastically scattered by said sensing member (101, 201, 301, 401, 501, 601) after impact with said sensing member.

**Patentansprüche**

1. Vorrichtung für Massenspektrometrie, die Folgendes aufweist:

ein Erfassungselement (101, 201, 301, 401, 501, 601), das in Reaktion auf ein Auftreffen eines Teilchens (105, 209, 318, 413, 507, 607) verformbar ist; einen Verformungsdetektor (311, 411, 505, 605), der dazu angeordnet und ausgelegt ist, eine Verformung des Erfassungselements in Reaktion auf das Auftreffen des Teilchens zu detektieren; eine Verarbeitungseinheit (417), um die detektierte Verformung mindestens einer Eigenschaft des Teilchens zuzuordnen; **dadurch gekennzeichnet, dass** das Erfassungselement, derart angeordnet und ausgelegt ist, dass das Teilchen (105, 209, 318, 507, 607) unelastisch und elastisch durch das Erfassungselement gestreut wird.

2. Vorrichtung nach Anspruch 1, wobei es sich bei dem Erfassungselement (101, 201, 301, 401, 501, 601) um eine Membran (201, 501, 601) oder ein Nanoröhrchen (101, 201, 401) oder einen Nanodraht (101, 201, 401) handelt.

3. Vorrichtung nach Anspruch 2, wobei es sich bei der Membran (201, 501, 601) um eine Graphen-Schicht handelt.

4. Vorrichtung nach Anspruch 2, wobei es sich bei dem Nanoröhrchen (101, 201, 401) um ein Kohlenstoff-Nanoröhrchen, ein Halbleiter-Nanoröhrchen oder ein Metall-Nanoröhrchen handelt.

5. Vorrichtung nach einem der vorhergehenden Ansprüche, wobei das Erfassungselement (101, 201, 301, 401, 501, 601) eine erhöhte Temperatur im Vergleich zu einer Raumtemperatur der Umgebung der Vorrichtung aufweist.

6. Vorrichtung nach einem der vorhergehenden Ansprüche, wobei sich das Erfassungselement (101, 201, 301, 401, 501, 601) in einem luftleeren Raum (103, 204, 305) befindet.

7. Vorrichtung nach einem der vorhergehenden Ansprüche, wobei das Erfassungselement (101, 201, 301, 401, 501, 601) passiv ist.

8. Vorrichtung nach einem der vorhergehenden Ansprüche, wobei das Erfassungselement (101, 201, 301, 401, 501, 601) eine Beschichtung (107, 207, 307, 409) aufweist, wobei die Beschichtung derart angeordnet ist, eine Eigenschaft einer Oberfläche des Erfassungselements zu modifizieren, wobei es sich bei der Eigenschaft um Oberflächenladung und Oberflächenenergie handelt.

9. Vorrichtung nach einem der vorhergehenden Ansprüche, wobei es sich bei dem Verformungsdetektor um einen optischen (311, 605), elektronischen (411, 505) oder kapazitiven Detektor (605) handelt.

10. Vorrichtung nach Anspruch 9, wobei der optische Detektor (311, 605) eine ladungsträgergekoppelte Schaltung (CCD - Charge Coupled Device) aufweist.

**11.** Vorrichtung nach einem der vorhergehenden Ansprüche, wobei es sich bei der Verformung um eine Ablenkung ($\delta$1, $\delta$2) des Erfassungselements handelt.

**12.** Vorrichtung nach Anspruch 11, wobei ein Maß der Ablenkung ($\delta$1, $\delta$2) eine Masse eines auftreffenden Teilchens (105, 209, 318, 507, 607) angibt.

**13.** Vorrichtung nach einem der vorhergehenden Ansprüche, wobei das Erfassungselement mit mindestens einer Elektrode verbunden ist.

**14.** Tragbare Mobilvorrichtung für Massenspektrometrie, die die Vorrichtung gemäß einem der vorhergehenden Ansprüche aufweist.

**15.** Verfahren für Massenspektrometrie, das die folgenden Schritte aufweist:

Empfangen eines Auftreffens eines Teilchens (105, 209, 318, 507, 607) durch das Erfassungselement (101, 201, 301, 401, 501, 601);
Detektieren einer Verformung des Erfassungselements (101, 201, 301, 401, 501, 601) in Reaktion auf das Auftreffen des Teilchens (105, 209, 318, 507, 607);
Zuordnen der Verformung zu mindestens einer Eigenschaft des Teilchens (105, 209, 318, 507, 607);
**dadurch gekennzeichnet, dass**
das Teilchen (105, 209, 318, 507, 607) unelastisch oder elastisch durch das Erfassungselement (101, 201, 301, 401, 501, 601) nach dem Aufprall auf das Erfassungselement gestreut wird.

**Revendications**

**1.** Dispositif pour la spectrométrie de masse comprenant :

un élément de détection (101, 201, 301, 401, 501, 601) déformable en réponse à une incidence d'une particule (105, 209, 318, 413, 507, 607) ;
un détecteur de déformation (311, 411, 505, 605) arrangé et configuré pour détecter une déformation dudit élément de détection en réponse à ladite incidence de ladite particule ;
une unité de traitement (417) destinée à associer ladite déformation détectée à au moins une propriété de ladite particule ;
**caractérisé en ce que**
ledit élément de détection est arrangé et configuré de telle façon que ladite particule (105, 209, 318, 507, 607) est dispersée de façon élastique ou inélastique par ledit élément de détection.

**2.** Dispositif selon la revendication 1, dans lequel ledit élément de détection (101, 201, 301, 401, 501, 601) est une membrane (201, 501, 601) ou un nanotube (101, 201, 401) ou un nanofil (101, 201, 401).

**3.** Dispositif selon la revendication 2, dans lequel ladite membrane (201, 501, 601) est une feuille de graphène.

**4.** Dispositif selon la revendication 2, dans lequel ledit nanotube (101, 201, 401) est un nanotube en carbone, un nanotube semiconducteur ou un nanotube métallique.

**5.** Dispositif selon l'une quelconque des revendications précédentes, dans lequel ledit élément de détection (101, 201, 301, 401, 501, 601) est à une température élevée en comparaison à une température ambiante des environs dudit dispositif.

**6.** Dispositif selon l'une quelconque des revendications précédentes, dans lequel ledit élément de détection (101, 201, 301, 401, 501, 601) est situé dans un espace sous vide (103, 204, 305).

**7.** Dispositif selon l'une quelconque des revendications précédentes, dans lequel ledit élément de détection (101, 201, 301, 401, 501, 601) est passif.

**8.** Dispositif selon l'une quelconque des revendications précédentes, dans lequel ledit élément de détection (101, 201, 301, 401, 501, 601) comprend un revêtement (107, 207, 307, 409), ledit revêtement étant arrangé pour modifier une propriété d'une surface dudit élément de détection, ladite propriété étant une charge de surface et/ou une énergie de surface.

9. Dispositif selon l'une quelconque des revendications précédentes, dans lequel ledit détecteur de déformation est un détecteur optique (311, 605), électronique (411, 505) ou capacitif (605).

10. Dispositif selon la revendication 9, dans lequel ledit détecteur optique (311, 605) comprend un dispositif à couplage de charge (CCD).

11. Dispositif selon l'une quelconque des revendications précédentes, dans lequel ladite déformation est une déflexion ($\delta_1$, $\delta_2$) dudit élément de détection.

12. Dispositif selon la revendication 11, dans lequel une quantité de ladite déflexion ($\delta_1$, $\delta_2$) indique une masse d'une particule (105, 209, 318, 507, 607) incidente.

13. Dispositif selon l'une quelconque des revendications précédentes, dans lequel ledit élément de détection est connecté à au moins une électrode.

14. Dispositif mobile portatif pour la spectrométrie de masse, comprenant le dispositif selon l'une quelconque des revendications précédentes.

15. Procédé pour la spectrométrie de masse, comprenant les étapes suivantes :

réception d'une incidence d'une particule (105, 209, 318, 507, 607) par un élément de détection (101, 201, 301, 401, 501, 601) ;
détection d'une déformation dudit élément de détection (101, 201, 301, 401, 501, 601) en réponse à ladite incidence de ladite particule (105, 209, 318, 507, 607) ;
association de ladite déformation à au moins une propriété de ladite particule (105, 209, 318, 507, 607) ;
**caractérisé en ce que**
ladite particule (105, 209, 318, 507, 607) est dispersée de façon élastique ou inélastique par ledit élément de détection (101, 201, 301, 401, 501, 601) après impact avec ledit élément de détection.

Fig. 1

*Fig. 2a*

*A - A*

*Fig. 2b*

EP 2 884 520 B1

Fig. 3

Fig. 4

14

503

507

505

505

505

501

*Fig. 5*

Fig. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6722200 B
- US 7900527 B1
- US 20120305760 A
- US 20110253542 A